(19) Europäisches Patentamt
European Patent Office
Office européen des brevets

(11) EP 2 323 204 A1

(12) EUROPEAN PATENT APPLICATION
published in accordance with Art. 153(4) EPC

(43) Date of publication:
18.05.2011 Bulletin 2011/20

(51) Int Cl.:
H01M 4/52 (2010.01)     H01M 2/16 (2006.01)
H01M 4/48 (2010.01)     H01M 4/50 (2010.01)
H01M 10/05 (2010.01)

(21) Application number: 09809955.9

(22) Date of filing: 20.08.2009

(86) International application number:
PCT/JP2009/064894

(87) International publication number:
WO 2010/024304 (04.03.2010 Gazette 2010/09)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 27.08.2008  JP 2008217829
25.03.2009  JP 2009073715

(71) Applicant: Sumitomo Chemical Company, Limited
Tokyo 104-8260 (JP)

(72) Inventors:
• MAKIDERA, Masami
  Tsukuba-shi
  Ibaraki 305-0047 (JP)
• KUZE, Satoru
  Tsukuba-shi
  Ibaraki 305-0045 (JP)

(74) Representative: Hart-Davis, Jason et al
Cabinet Beau de Loménie
158, rue de l'Université
75340 Paris Cedex 07 (FR)

(54) ELECTRODE ACTIVE MATERIAL AND METHOD FOR PRODUCING SAME

(57) Disclosed are an electrode active material and a method for producing an electrode active material. The method for producing an electrode active material comprises the following steps (i), (ii) and (iii). (i) An aqueous solution containing M is brought into contact with a precipitant, thereby obtaining a precipitate, wherein M represents at least two elements selected from the group consisting of metal elements other than alkali metal elements. (ii) The precipitate is mixed with a sodium compound, thereby obtaining a mixture. (iii) The mixture is calcined.

Fig.20

**Description**

TECHNICAL FIELD

The present invention relates to an electrode active material and a method for producing the same. More particularly, it relates to an electrode active material usable for a sodium secondary battery and a method for producing the same.

BACKGROUND ART

An electrode containing an electrode active material is commonly used in an electrochemical device such as a battery. As a battery, a lithium secondary battery is representative, and has been already utilized as a small-scale power source for a cell phone or a notebook PC, and is increasing in demand, because it can be used as a large-scale power source such as an automobile power source, e.g., an electric car and a hybrid car, and a distributed electric power storage device. However, since a material constituting an electrode of a lithium secondary battery contains a large amount of rare metals such as lithium, there is a concern that a supply shortage of such materials may occur with an increase in the demand for a large-scale power source.

In this situation, a sodium secondary battery has been studied as a secondary battery capable of eliminating such concern of short supply. The sodium secondary battery can be constituted by materials that are rich in resources and also inexpensive, and through development, large-scale power sources are expected to be supplied in a large quantity.

As an electrode active material contained in an electrode of such battery, Japanese Unexamined Patent Publication No. 2005-317511 (Examples 1 and 2) discloses an electrode active material made of a metal oxide expressed by the formula $NaFeO_2$, and discloses that $Na_2O_2$ and $Fe_3O_4$ are mixed in a solid state and calcined to yield an electrodes active material.

SUMMARY OF INVENTION

However, there is still room for improvement in terms of the discharge capacity retention rate after charge and discharge are conducted repeatedly in a sodium secondary battery using the above-described electrode active material. An object of the present invention is to provide an electrode active material, which can decrease an amount of rare metal elements such as lithium, and further impart a higher discharge capacity retention rate after charge and discharge are conducted repeatedly to a sodium secondary battery, as well as a method for producing the same.

The present inventors studied intensively for achieving the object and have completed the present invention. More particularly, the present invention provides the following.

[1] A method for producing an electrode active material, comprising the steps of:

(i) bringing an aqueous solution containing M into contact with a precipitant to yield a precipitate, wherein M represents at least two elements selected from the group consisting of metal elements other than alkali metal elements;
(ii) mixing the precipitate with a sodium compound to yield a mixture; and
(iii) calcining the mixture.

[2] The method according to [1], wherein M represents at least two selected from the group consisting of Fe, Mn, Ni, Co ti.
[3] The method according to [1] or [2], wherein the precipitant is in a form of an aqueous solution.
[4] An electrode active material comprising a powdery mixed metal oxide containing sodium and M, wherein M represents at least two elements selected from the group consisting of metal elements other than alkali metal elements, wherein the particle size (D50) of the mixed metal oxide determined by a volume-based cumulative particle size distribution at 50% cumulation counted from the smallest particle size side thereof is less than 1.0 $\mu$m.
[5] The electrode active material according to [4], wherein the mixed metal oxide is represented by formula (1):

$$Na_xMO_2 \qquad (1)$$

wherein M represents at least two selected from the group consisting of metal elements other than alkali metal elements, and x is more than 0 but not more than 1.
[6] The electrode active material according to [4] or [5], wherein M represents at least two elements selected from the group consisting of Fe, Mn, Co, Ni and Ti.

[7] The electrode active material according to any one of [4] to [6], wherein M represents a combination of Fe, Mn and Ni.

[8] An electrode comprising the electrode active material according to any one of [4] to [7].

[9] A sodium secondary battery comprising the electrode according to [8] as a positive electrode.

[10] The sodium secondary battery according to [9], further comprising a separator.

[11] The sodium secondary battery according to [10], wherein the separator comprises a laminate film composed of a heat-resistant porous layer and a porous film.

DESCRIPTION OF DRAWINGS

Fig. 1 shows the volume-based cumulative particle size distribution of electrode active material 1;
Fig. 2 shows the X-ray diffraction pattern of electrode active material 1;
Fig. 3 shows the discharge capacity retention rate of secondary battery 1;
Fig. 4 shows the volume-based cumulative particle size distribution of electrode active material 2;
Fig. 5 shows the X-ray diffraction pattern of electrode active material 2;
Fig. 6 shows the discharge capacity retention rate of secondary battery 2;
Fig. 7 shows the volume-based cumulative particle size distribution of electrode active material 3;
Fig. 8 shows the X-ray diffraction pattern of electrode active material 3;
Fig. 9 shows the discharge capacity retention rate of secondary battery 3;
Fig. 10 shows the volume-based cumulative particle size distribution of electrode active material 4;
Fig. 11 shows the X-ray diffraction pattern of electrode active material 4;
Fig. 12 shows the discharge capacity retention rate of secondary battery 4;
Fig. 13 shows the volume-based cumulative particle size distribution of electrode active material 5;
Fig. 14 shows the X-ray diffraction pattern of electrode active material 5;
Fig. 15 shows the discharge capacity retention rate of secondary battery 5;
Fig. 16 shows the volume-based cumulative particle size distribution of electrode active material R1;
Fig. 17 shows the X-ray diffraction pattern of electrode active material R1;
Fig. 18 shows the discharge capacity retention rate of secondary battery R1;
Fig. 19 shows an example (schematic view) of a coin-shaped sodium secondary battery; and
Fig. 20 shows an example (schematic view) of a cylindrical sodium secondary battery.

MODE FOR CARRYING OUT THE INVENTION

Method for Producing Electrode Active Material

A method for producing an electrode active material according to the present invention comprises the following steps (i), (ii) and (iii):

(i) bringing an aqueous solution containing M into contact with a precipitant to yield a precipitate,
(ii) mixing the precipitate with a sodium compound to yield a mixture, and
(iii) calcining the mixture.

An electrode active material yielded by the producing method can construct a sodium secondary battery, which has a higher discharge capacity retention rate after charge and discharge are conducted repeatedly.

Step (i)

M is at least two elements selected from the group consisting of metal elements other than alkali metal elements.

Examples of M include a combination of Fe and Mn, a combination of Fe and Ni, a combination of Fe and Co, a combination of Fe and Ti, a combination of Mn and Ni, a combination of Mn and Co, a combination of Mn and Ti, a combination of Ni and Co, a combination of Ni and Ti, a combination of Co and Ti, a combination of Fe, Mn and Ni, a combination of Fe, Mn and Co, a combination of Fe, Mn and Ti, a combination of Fe, Ni and Co, a combination of Fe, Ni and Ti, a combination of Fe, Co and Ti, a Combination of Fe, Mn, Ni and Co, a combination of Fe, Mn, Ni and Ti, and a combination of Fe, Mn, Ni, Co and Ti.

M is preferably at least two elements selected from the group consisting of Fe, Mn, Ni, Co and Ti, more preferably at least two elements selected from the group consisting of Fe, Mn and Ni, and further preferably a combination of Fe and Mn or a combination of Fe, Mn and Ni.

M is at least two metal elements, and examples of the atomic ratio of the metal elements include the following. In case M consists of two metal elements (the respective metal elements are expressed as M1 and M2), M1 and M2 satisfy usually $0.05 \leq M1 \leq 0.95$, $0.05 \leq M2 \leq 0.95$, and M1 + M2 = 1 ;
preferably $0.1 \leq M1 \leq 0.9$, $0.1 \leq M2 \leq 0.9$, and M1 + M2 = 1; and
more preferably $0.2 \leq M1 \leq 0.8$, $0.2 \leq M2 \leq 0.8$ and M1 + M2 = 1.

In case M consists of three metal elements (the respective metal elements are expressed as M1, M2 and M3), M1, M2 and M3 satisfy usually $0.05 \leq M1 \leq 0.90$, $0.05 \leq M2 \leq 0.90$, $0.05 \leq M3 \leq 0.90$, and M1 + M2 + M3 = 1; and
preferably $0.2 \leq M1$ $0.6$, $0.2 \leq M2 \leq 0.6$, $0.2 \leq M3 \leq 0.6$, and M1 + M2 + M3 = 1.

In case M consists of four metal elements (the respective metal elements are expressed as M1, M2, M3 and M4), M1, M2, M3 and M4 satisfy usually $0.05 \leq M1 \leq 0.85$, $0.05 \leq M2 \leq 0.85$, $0.05 \leq M3 \leq 0.85$, $0.05 \leq M4 \leq 0.85$, and M1 + M2 + M3 + M4 = 1; and
preferably $0.2 \leq M1 \leq 0.4$, $0.2 \leq M2 \leq 0.4$, $0.2 \leq M3 \leq 0.4$, $0.2 \leq M4 \leq 0.4$, and M1 + M2 + M3 + M4 = 1.

In case M consists of five metal elements (the respective metal elements are expressed as M1, M2, M3, M4 and M5), M1, M2, M3, M4 and M5 satisfy usually $0.05 \leq M1 \leq 0.8$, $0.05 \leq M2 \leq 0.8$, $\leq 0.05 \leq M3 \leq 0.8$, $0.05 \leq M4 \leq 0.8$, $0.05 \leq M5 \leq 0.8$, and M1 + M2 + M3 + M4 + M5 = 1; and preferably $0.1 \leq M1 \leq 0.6$, $0.1 \ 1 \leq M2 \leq 0.6$, $0.1 \leq M3 \leq 0.6$, $0.1 \leq M4 \leq 0.6$, $0.1 \leq M5 \leq 0.6$, and M1 + M2 + M3 + M4 + M5 = 1.

An aqueous solution containing M is usually prepared by dissolving in water a compound, such as a chloride, a nitrate, an acetate, a formate, and an oxalate, which are used as a source material. Among such compounds, a chloride is preferable. In case a source material poorly soluble in water is used, in other words, if a source material, such as an oxide, hydroxide and metallic material, is used, then the material may be dissolved in an acid, such as hydrochloric acid, sulfuric acid, and nitric acid, or an aqueous solution thereof to prepare the aqueous solution containing M.

A precipitant is one or more compounds selected from the group including, for example, LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate), $(NH_4)_2CO_3$ (ammonium carbonate), and $(NH_2)_2CO$ (urea). A precipitant may be a hydrate of one or more of the compounds, or a combination of one or more of the compounds and hydrates thereof. A precipitant is preferably dissolved in water and used in a form of an aqueous solution. The concentration of a precipitant in a form of an aqueous solution is usually about 0.5 to about 10 mol/L, and preferably about 1 to about 8 mol/L. A precipitant is preferably NaOH, and more preferably an NaOH aqueous solution. Another example of a precipitant in an aqueous solution form includes ammonia water, and a combination of ammonia water with an aqueous solution of one of the above-listed compounds may be used.

Bringing an aqueous solution containing M into contact with a precipitant can be conducted, for example, by a method to add a precipitant (including a precipitant in a form of an aqueous solution) to an aqueous solution containing a metal element M; a method to add an aqueous solution containing a metal element M to a precipitant in a form of an aqueous solution; or a method to add an aqueous solution containing a metal element M and a precipitant (including a precipitant in a form of an aqueous solution) to water. The addition is preferably carried out with stirring. Among the above contact methods, the method to add an aqueous solution containing a metal element M to a precipitant in a form of an aqueous solution is preferable from the standpoints of easier maintenance of the pH and easier regulation of the particle size. In this case, as addition of an aqueous solution containing a metal element M to a precipitant in a form of an aqueous solution progresses, the pH tends to decrease. Therefore, it is preferable to add the aqueous solution containing a metal element M so as to control the pH at 9 or higher, and more preferably at 10 or higher. Such control can also be carried out by adding a precipitant in a form of an aqueous solution.

A precipitate yielded by the contact contains M, wherein M represents at least two elements selected from the group consisting of metal elements other than alkali metal elements.

When an aqueous solution containing a metal element M is brought into contact with a precipitant, a slurry is generally formed. A precipitate can be recovered by solid-liquid separation of the slurry. The solid-liquid separation can be conducted according to a conventional method, and, from the standpoint of ease of handle, filtration should be preferably conducted. The solid-liquid separation may also be carried out by a method to evaporate a liquid by heating, such as spray drying. The recovered precipitate may be subjected to treatments, such as washing and drying. Excess precipitant, which may occasionally adhere to the recovered precipitate, can be reduced by washing. A washing liquid may be water or a water soluble organic solvent, such as alcohol and acetone, and is preferably water. Drying may be carried out by heat-drying, air-circulation drying, vacuum drying, etc. In case of heat-drying, the drying temperature is usually about 50°C to about 300°C, and preferably about 100°C to about 200°C. Washing or drying may be conducted twice or more.

Step (ii)

In step (ii), the precipitate yielded in step (i) is mixed with a sodium compound to form a mixture.
A sodium compound may be, for example, one or more selected from the group consisting of sodium hydroxide, sodium chloride, sodium nitrate, sodium peroxide, sodium sulfate, sodium hydrogen carbonate, sodium oxalate and sodium carbonate, or a hydrate thereof.
An amount of a sodium compound is 0.2 to 1, more preferably 0.4 to 1, and especially preferably 0.8 to 1 in terms of an atomic ratio relative to the total amount of M in a precipitate.
Mixing may be carried out either dry or wet. From the standpoint of simplicity, dry mixing is preferable. Examples of a mixing device include a stirring mixer, a V-shaped mixer, a W-shaped mixer, a ribbon mixer, a drum mixer, and a ball mill.

Step (iii)

In step (iii), the mixture prepared in step (ii) is calcined.
Calcination is usually carried out by retaining at a calcination temperature of about 400°C to about 1200°C, and preferably about 500°C to about 1000°C, depending on a type of a sodium compound. The retention time at a calcination temperature is usually 0.1 to 20 hours, and preferably 0.5 to 10 hours. The temperature increase rate to a calcination temperature is usually 50°C to 400°C/hour, and the temperature decrease rate from the calcination temperature to the room temperature is usually 10°C to 400°C/hour. The atmosphere for the calcination is, for example, air, oxygen, nitrogen, argon, or a mixture thereof, and preferably air.
An electrode active material yielded by a calcination may be fractured by means of a ball mill, a jet mill, etc., and calcination and fracturing may be repeatedly conducted twice or more. An electrode active material may be optionally washed or classified.
With an electrode active material thus yielded, a sodium secondary battery having a higher discharge capacity retention rate after charge and discharge are conducted repeatedly can be provided.

Electrode Active Material

An electrode active material contains a powdery mixed metal oxide, which contains sodium and M.
M is at least two elements selected from the group consisting of metal elements other than alkali metal elements, as exemplified above for step (i). The atomic ratio among the metals is also the same as exemplified above for step (i).
The particle size (D50) of the powdery mixed metal oxide determined by a volume-based cumulative particle size distribution at 50% cumulation counted from the smallest particle size side thereof is less than 1.0 $\mu$m. The particle size (D50) is preferably not less than 0.2 $\mu$m but less than 1.0 $\mu$m. The particle size (D50) can be measured by a laser diffraction and scattering method particle size distribution measurement apparatus. An electrode active material can be yielded by the above-described production method.
From the viewpoint of producing a high capacity sodium secondary battery, a mixed metal oxide for an electrode active material is preferably represented by following formula (1):

$$Na_xMO_2 \qquad (1)$$

wherein M represents at least two elements selected from the group consisting of metal elements other than alkali metal elements, and x is more than 0 but not more than 1.
In formula (1), M is preferably at least two elements selected from the group consisting of Fe, Mn, Ni, Co and Ti, and preferably at least two elements selected from the group consisting of Fe, Mn and Ni, and especially preferably a combination of Fe and Mn or a combination of Fe, Mn and Ni. In case M is the preferable metal elements, the electrode active material shows higher electron conductivity. Especially in case M is a combination of Fe, Mn and Ni, the volume shrinkage rate of an electrode active material crystal after charge and discharge can be lowered and an extremely high discharge capacity retention rate can be obtained. In formula (1), x is preferably 0.2 to 1, more preferably 0.4 to 1. and especially preferably 0.8 to 1.
Further, an electrode active material has preferably a layered crystal structure, and more preferably an $\alpha$-NaFeO$_2$ type crystal structure. Using an electrode active material having such crystal structure, a sodium secondary battery, which can suppress better a potential drop during a discharge, can be produced.
A compound other than an electrode active material may adhere to the surface of a particle that constitutes an electrode active material, insofar as the advantages of the present invention be not impaired. Examples of the compound include a compound containing, for example, one or more elements selected from the group consisting of B, Al, Ga, In, Si, Ge, Sn, Mg and transition metal elements, preferably a compound containing one or more elements selected from the group consisting of B, Al, Mg, Ga, In and Sn, and more preferably a compound of Al. Specific examples of the compound include an oxide, a hydroxide, an oxyhydroxide, a carbonate, a nitrate and an organic salt of the above-listed element, and more preferable are an oxide, a hydroxide, and an oxyhydroxide. The may be used in a combination, the compounds, alumina is most preferable. An electrode active material may be heated after adhering.

Electrode

An electrode comprises the electrode active material. The electrode is useful as an electrode for a sodium secondary battery, and can be used as a positive electrode or a negative electrode of the battery. From the viewpoint of producing a sodium secondary battery that provides a larger potential difference, namely a sodium secondary battery that provides a higher energy density, the electrode is preferably used as a positive electrode of a sodium secondary battery.

Sodium Secondary Battery

A sodium secondary battery comprises usually a positive electrode, a negative electrode, a separator, and electrolyte.
An example of a sodium secondary battery having the electrode as a positive electrode will be described.

Positive Electrode

A positive electrode comprises a positive electrode current collector and a positive electrode mixture, and the positive electrode mixture is supported by the positive electrode current collector. A positive electrode mixture comprises a positive electrode active material, a binder and, optionally, an electrically conductive material.
Materials of a positive electrode current collector of a sodium secondary battery are aluminum (Al), nickel (Ni), a stainless steel, etc.
A binder may be exemplified in a thermoplastic resin, and specific examples thereof include a fluorocarbon resin, such as poly(vinylidene fluoride) (hereinafter occasionally referred to as "PVDF"), polytetrafluoroethylene, a tetrafluoroethylene/hexafluoropropylene/vinylidene fluoride copolymer, a hexafluoropropylene/vinylidene fluoride copolymer, and a tetrafluoroethylene/perfluorovinyl ether copolymer; and a polyolefin resin, such as polyethylene, and polypropylene.
Examples of an electrically conductive material include a carbonaceous material, such as natural graphite, artificial graphite, cokes and carbon black.
Examples of a method for supporting a positive electrode mixture on a positive electrode current collector include a method of press molding, and a method, by which a paste is formed using an organic solvent, etc., and applied on the positive electrode current collector, followed by fixing by means of, e.g., drying and pressing. To form a paste, a slurry of a positive electrode active material, an electrically conductive material, a binder and an organic solvent is prepared. Examples of the solvent include amines, such as N,N-dimethylaminopropylamine, and diethyltriamine; ethers, such as ethylene oxide, and tetrahydrofuran; ketones, such as methyl ethyl ketone; esters, such as methyl acetate; and aprotic polar solvents, such as dimethylacetamide, and N-methyl-2-pyrrolidone. Examples of a technique for applying a positive electrode mixture on a positive electrode current collector include a slit-die coating technique, a screen coating technique, a curtain coating technique, a knife coating technique, a gravure coating technique, and a static spray coating technique.

Negative Electrode

An example of a negative electrode includes an electrode that can absorb and desorb sodium ions, such as a negative electrode current collector supporting a negative electrode mixture containing a negative electrode active material, a sodium metal and a sodium alloy. A negative electrode mixture contains a negative electrode active material and, optionally, a binder and an electrically conductive material. For example, a negative electrode mixture may contain a mixture of a negative electrode active material and a binder.
Examples of a negative electrode current collector include copper (Cu), nickel (Ni), and stainless steel, and Cu is preferable, because it does not alloy easily with sodium and it is easily formed into a thin foil.
Examples of a negative electrode active material include a carbonaceous material that can absorb and desorb sodium ions, such as natural graphite, artificial graphite, cokes, carbon black, pyrolytic carbons, carbon fibers, and materials obtained by calcining organic polymers. As for a form of a carbonaceous material, any of a flaky form like natural graphite, a spherical form like mesocarbon microbeads, a fibrous form like graphitized carbon fibers, and an aggregate of fine particles may be acceptable. A carbonaceous material functions sometimes as an electrically conductive material. As a negative electrode active material, a chalcogen compound such as an oxide and a sulfide that can absorb and desorb sodium ions at a lower potential than a positive electrode may be used.

An example of a binder includes a thermoplastic resin, and specific examples thereof include PVDF, a thermoplastic polyimide, carboxymethylcellulose, polyethylene, and polypropylene.

A method for supporting a negative electrode mixture on a negative electrode current collector is the same as the above-described positive electrode, and examples thereof include a method of press molding, and a method, by which a paste is formed using a solvent, etc., and applied on the negative electrode current collector, followed by fixing by means of, e.g., drying and pressing.

Separator

Examples of a material contained in a separator include a polyolefin resin, such as polyethylene and polypropylene, a fluorocarbon resin, and an aromatic polymer containing nitrogen. A separator may contain a material in a form of a porous film, a nonwoven fabric or a woven fabric. A separator may be single-layered with or laminated with a combination of two of more of the materials. Examples of a separator are disclosed in Japanese Unexamined Patent Publication No. 2000-30686 or Japanese Unexamined Patent Publication No. 10-324758. The thickness of a separator should be thinner, insofar as the mechanical strength suffice, because the energy density per volume of a battery can be higher and the internal resistance can be lower. The thickness of a separator is usually about 5 $\mu$m to about 200 $\mu$m, preferably about 5 $\mu$m to about 40 $\mu$m. From the viewpoint of ion permeability, the air permeance of a separator according to Gurley method is preferably 50 to 300 sec/100 cm$^3$, and more preferably 50 to 200 sec/100 cm$^3$. The porosity of a separator is usually 30% by volume to 80% by volume, and preferably 40% by volume to 70% by volume. A separator may be a laminate of separators of different porosities.

A separator should preferably have a porous film containing a thermoplastic resin. It is usually preferable that a secondary battery should have a function to block an over-current or to shutdown the system by cutting off the current, when an abnormal current should flow in the battery by a short circuit between a positive electrode and a negative electrode. The shutdown can be carried out by closing micro-pores in a separator when the temperature exceeds a normal working temperature. After the micro-pores in a separator are closed, the separator should preferably not rupture and should maintain the closed condition of the micro-pores in the separator, even when the temperature in a battery should rise to a certain high temperature. Examples of such a separator include a laminate film composed of a heat-resistant porous layer and a porous film, and a separator made of the laminate film can increase the heat resistance of a secondary battery.

More particulars of a laminate film composed of a heat-resistant porous layer and a porous film will be described. In such a laminate film, a heat-resistant porous layer has higher heat resistance than a porous film, and the heat-resistant porous layer may be constituted of inorganic powders, or contain a heat-resistant resin. In case a heat-resistant porous layer should contain a heat-resistant resin, a heat-resistant porous layer can be formed easily by a coating method, etc. Examples of a heat-resistant resin include polyamide, polyimide, polyamide-imide, polycarbonate, polyacetal, polysulfone, polyphenylene sulfide, polyetherketone, aromatic polyester, polyethersulfone, and polyetherimide. Preferable heat-resistant resins are polyamide, polyimide, polyamide-imide, polyethersulfone, and polyetherimide; and more preferable heat-resistant resins are polyamide, polyimide, and polyamide-imide. Still more preferable heat-resistant resins are aromatic polymers containing nitrogen, such as an aromatic polyamide (para-oriented aromatic polyamide, meta-oriented aromatic polyamide), an aromatic polyimide, and an aromatic polyamide-imide, and an especially preferable heat-resistant resin is an aromatic polyamide, and from the standpoint of ease of use, a para-oriented aromatic polyamide (hereinafter occasionally referred to as "para-aramid") is most preferable. Further, other examples of a heat-resistant resin may include poly(4-methylpentene-1), and a cyclic olefin polymer. Using such a heat-resistant resin, the heat resistance of a laminate film, in other word, the thermal rupture temperature of a laminate film may be increased. In case, among the heat-resistant resins, an aromatic polymer containing nitrogen is used, probably due to its intra-molecular polarity, the compatibility with an electrolyte solution, namely the liquid retention property in a heat-resistant porous layer, is occasionally improved, and the impregnating speed of a nonaqueous electrolyte solution in producing a sodium secondary battery becomes higher, and the charge-discharge capacity of a sodium secondary battery also becomes higher.

The thermal rupture temperature of a laminate film depends on a type of a heat-resistant resin and is selected appropriately according to an application condition and purpose. In case an aromatic polymer containing nitrogen is used as a heat-resistant resin, the thermal rupture temperature can be controlled at about 400°C; in case poly(4-methylpentene-1) is used, at about 250°C; and in case a cyclic olefin polymer is used, at about 300°C respectively. Further, in case a heat-resistant porous layer contains inorganic powders, the thermal rupture temperature can be controlled, for example, at 500°C or higher.

Para-aramid can be synthesized by a condensation polymerization of a para-oriented aromatic diamine and a para-oriented aromatic dicarboxylic acid halide, and is substantially constituted by repetition units bonded by amide bonds formed at a para-position or a quasi-para-position (for example, as in 4,4'-biphenylene, 1,5-naphthalene, 2,6-naphthalene, etc., orienting reversely on the same axis or in parallel). Specific examples include a para-aramid having a para-oriented structure or a quasi-para-oriented structure, such as poly(p-phenylene terephthalamide), poly(p-benzamide), poly(4,4'-benzanilide terephthalamide), poly(p-phenylene-4,4'-biphenylenedicarboxamide), poly(p-phenylene-2,6-naphthalenedicarboxamide), poly(2-chloro-p-phenylene terephthalamide), and p-phenylene terephthalamide/2,6-dichloro-p-phenylene terephthalamide copolymer.

As an aromatic polyimide, a wholly aromatic polyimide yielded by condensation polymerization of an aromatic dianhydride and a diamine is preferable. Specific examples of a dianhydride include pyromellitic dianhydride, 3,3',4,4'-diphenylsulfone tetracarboxylic dianhydride, 3,3',4,4'-benzophenonetetracarboxylic dianhydride, 2,2'-bis(3,4-dicarboxyphenyl)hexafluoropropane, and 3,3',4,4'-biphenyltetracarboxylic dianhydride. Specific examples of the diamine include oxydianiline, p-phenylenediamine, benzophenonediamine, 3,3'-methylenedianiline, 3,3'-diaminobenzophenone, 3,3'-diaminodiphenyl sulfone, and 1,5'-naphthalenediamine. Further, a polyimide soluble in a solvent can be favorably utilized. An example of such a polyimide is a polyimide prepared by polycondensation of 3,3',4,4'-diphenylsulfone tetracarboxylic dianhydride and an aromatic diamine.

Examples of an aromatic polyamide-imide include those prepared by condensation polymerization of an aromatic dicarboxylic acid and an aromatic diisocyanate; and those prepared by condensation polymerization of an aromatic dianhydride and an aromatic diisocyanate. Specific examples of an aromatic dicarboxylic acid include isophthalic acid and terephthalic acid. A specific example of an aromatic dianhydride includes trimellitic anhydride. Specific examples of an aromatic diisocyanate include 4,4'-diphenylmethane diisocyanate, 2,4-tolylene diisocyanate, 2,6-tolylene diisocyanate, o-tolylene diisocyanate, and m-xylene diisocyanate.

For the sake of higher sodium ion permeability, the thickness of a heat-resistant porous layer is preferably 1 $\mu$m to 10 $\mu$m, more preferably 1 $\mu$m to 5 $\mu$m, and especially preferably 1 $\mu$m to 4 $\mu$m. A heat-resistant porous layer has micro-pores, whose pore size (diameter) is usually 3 $\mu$m or less, and preferably 1 $\mu$m or less.

In case a heat-resistant porous layer contains a heat-resistant resin, it may further contain a filler. A material for a filler may be selected from among an organic powder, an inorganic powder, or a mixture thereof. Powders constituting a filler have preferably a particles size of 0.01 $\mu$m to 1 $\mu$m.

Examples of an organic powder include a powder of an organic material such as a homopolymer of, or a copolymer of two or more of, styrene, vinyl ketone, acrylonitrile, methyl methacrylate, ethyl methacrylate, glycidyl methacrylate, glycidyl acrylate, methyl acrylate, etc.; a fluorine containing resin, including polytetrafluoroethylene, a tetrafluoroethylene-hexafluoropropylene copolymer, a tetrafluoroethylene-ethylene copolymer, and polyvinylidenefluoride; a melamine resin; a urea resin; a polyolefin; and a polymethacrylate. An organic powder may be used alone or in combination of two or more. Among the organic powders, a polytetrafluoroethylene powder is preferable from the viewpoint of chemical stability.

An inorganic powder contains an inorganic material, such as a metal oxide, a metal nitride, a metal carbide, a metal hydroxide, a carbonate, and a sulfate. Among them, an inorganic material with the low electric conductivity is preferably used, and specific examples thereof include alumina, silica, titanium dioxide, and calcium carbonate. An inorganic powder may be used alone or in combination of two or more. Among the inorganic powders, an alumina powder is preferable from the viewpoint of chemical stability. In this case, all of the particles that constitute a filler are preferably alumina particles, and more preferably is an embodiment in which all of the particles that constitute a filler are alumina particles and a part of or all of them are almost spherical alumina particles. In this connection, when a heat-resistant porous layer is formed by an inorganic powder, the above-described inorganic powder may be used, and optionally it may be used as a mixture with a binder.

In case a heat-resistant porous layer contains a heat-resistant resin, the content of a filler in a heat-resistant porous layer, although it depends on the specific gravity of a filler material, is usually 5 to 95 parts by weight, preferably 20 to 95 parts by weight, and more preferably 30 to 90 parts by weight, based on 100 parts by weight of the total weight of the heat-resistant porous layer. The above range is especially favorable, in case all of the particles that constitute a filler are alumina particles.

Examples of a filler form include approximately spherical, scaly, columnar, needle-shaped, whisker-shaped, and fibrous forms, and a particle of any form may be used. However, for the sake of easier formation of uniform pores, an approximately spherical particle is preferable. An approximately spherical particle is exemplified in a particle having a particle aspect ratio (the major axis of a powder/the minor axis of a powder) in a range of 1 to 1.5. The aspect ratio of a particle can be measured by an electron microscope photograph.

A porous film having micro-pores in a laminate film has usually a shutdown function. The size (diameter) of micro-pores in a porous film is usually 3 $\mu$m or less, and preferably 1 $\mu$m or less. The porosity of a porous film is usually 30 to 80% by volume, and preferably 40 to 70% by volume. If the temperature of a sodium secondary battery exceeds a normal working temperature, micro-pores can be closed by deformation or softening of a porous film according to the shutdown function.

As a resin constituting a porous film in a laminate film, any resin that does not dissolve in an electrolyte solution in a sodium secondary battery should be selected. Specific examples thereof include a polyolefin resin, such as polyethylene and polypropylene, and a thermoplastic polyurethane resin, and a mixture of two or more thereof may be also used. In order to shutdown by softening at a lower temperature, a porous film should preferably contain a polyolefin resin, and more preferably polyethylene. Specific examples of polyethylene include low density polyethylene, high density polyethylene, and linear polyethylene, as well as ultra high molecular weight polyethylene may be included. In order to increase the puncture resistance of a porous film, a constituting resin should preferably contain ultra high molecular weight polyethylene. In some cases from the standpoint of manufacture of a porous film, a wax made of a polyolefin with a low molecular weight (the weight-average molecular weight of 10,000 or less) should preferably be contained.

The thickness of a porous film in a laminate film is usually 3 to 30 μm, and preferably 3 to 25 μm. The thickness of a laminate film is usually 40 μm or less, and preferably 20 μm or less. Expressing the thickness of a heat-resistant porous layer as A (μm), and the thickness of a porous film as B (μm), the value of A/B is preferably 0.1 to 1.

A method for producing a laminate film will be described below.

Firstly, a method for producing a porous film is described. There is no particular restriction on a method for producing a porous film, and such a method may be exemplified in a method as described in Japanese Unexamined Patent Publication No. 7-29563, by which a thermoplastic resin mixed with a plasticizer is formed into a film and then the plasticizer is removed by an appropriate solvent, or a method as described in Japanese Unexamined Patent Publication No. 7-304110, by which using a thermoplastic resin film produced by a conventional method, structurally weak amorphous parts of the film are selectively stretched to form micro-pores. In case, for example, a porous film is formed by a polyolefin resin containing ultra high molecular weight polyethylene and a low molecular weight polyolefin (the weight-average molecular weight of 10,000 or less), the production according to the following methods is preferable from the standpoint of production cost:

a method comprising the steps of

(1) preparing a polyolefin resin composition by kneading 100 parts by weight of ultra high molecular weight polyethylene, 5 to 200 parts by weight of a low molecular weight polyolefin (the weight-average molecular weight of 10,000 or less) and 100 to 400 parts by weight of an inorganic filler;
(2) forming the polyolefin resin composition into a sheet;
(3) removing the inorganic filler from the sheet prepared at step (2); and
(4) stretching the sheet prepared at step (3) to yield a porous film; or

a method comprising the steps of

(1) preparing a polyolefin resin composition by kneading 100 parts by weight of ultra high molecular weight polyethylene, 5 to 200 parts by weight of a low molecular weight polyolefin (the weight-average molecular weight of 10,000 or less) and 100 to 400 parts by weight of an inorganic filler;
(2) forming the polyolefin resin composition into a sheet;
(3) stretching the sheet prepared at step (2); and
(4) removing the inorganic filler from the sheet prepared at step (3) to yield a porous film.

The mean particle size (diameter) of an inorganic filler is preferably 0.5 μm or less, and more preferably 0.2 μm or less, from the viewpoints of strength and ion permeability of a porous film. In this case, the mean particle size is a value measured from an electron microscope photograph. More particularly, 50 particles are extracted at random from particles of the inorganic filler appeared on the photograph, whose respective particle sizes are measured and averaged.

Examples of an inorganic filler include calcium carbonate, magnesium carbonate, barium carbonate, zinc oxide, calcium oxide, aluminum hydroxide, magnesium hydroxide, calcium hydroxide, calcium sulfate, silicic acid, zinc oxide, calcium chloride, sodium chloride, and magnesium sulfate. Such inorganic filler can be removed from a sheet or a film by an acid or alkali solution. From the viewpoints of controllability of the particle size and selective solubility in an acid, the use of calcium carbonate is preferable.

There is no particular restriction on a method for preparing a polyolefin resin composition, and source materials composing a polyolefin resin composition, such as a polyolefin resin and an inorganic filler, are blended by a mixing apparatus, such as rolls, a Bambury mixer, a single screw extruder, and a twin screw extruder, to yield a polyolefin resin composition. On occasion of blending source materials, an additive, such as a fatty acid ester, a stabilizer, an antioxidant, a UV absorber, and a flame retardant may be optionally added.

There is no particular restriction on a method for producing a sheet composed of a polyolefin resin composition, and it can be produced by a sheet-forming method, such as a blown film method, a calendering method, a T-die extrusion method, and a Scaife method. Since a sheet with high thickness accuracy can be obtained, it should preferably be produced according to the following method.

A preferable method for producing a sheet of a polyolefin resin composition is a roll-forming of a polyolefin resin composition using a pair of rotating forming tools, whose surface temperature is regulated higher than the melting point of a polyolefin resin contained in the polyolefin resin composition. The surface temperature of a rotating forming tool is preferably (the melting point + 5)°C or higher. The upper limit of the surface temperature is preferably (the melting point + 30)°C or less, and more preferably (the melting point + 20)°C or less. A pair of rotating forming tools is exemplified in rolls and belts. The circumferential velocities of both the rotating forming tools should not necessarily be exactly identical, but the difference should be within a range of about ±5%. By production of a porous film using a sheet produced by such methods, a porous film superior in the strength, ion permeability, air permeance, etc., can be obtained. A laminate of single layer sheets produced respectively by the above-described method may be used for producing a porous film.

When a polyolefin resin composition is rolled by a pair of rotating forming tools, a polyolefin resin composition extruded from an extruder in a strand form may be directly supplied between the rotating forming tool pair, or a pelletized polyolefin composition may be supplied.

To stretch a sheet of a polyolefin resin composition, or a sheet prepared by removing an inorganic filler from a sheet, a tenter, rolls or an autograph can be used. From the viewpoint of air permeance, the stretch ratio is preferably 2 to 12, and more preferably 4 to 10. The stretching temperature is usually a temperature not lower than the softening point and not higher than the melting point of a polyolefin resin, and preferably between 80 and 115°C. If the stretching temperature is too low, sheet breakage takes place easier, and if it is too high, the air permeance or ion permeability of the resulted porous film may become too low. It is preferable to conduct heat-setting after stretching. The heat-setting temperature is preferably a temperature less than the melting point of a polyolefin resin.

A porous film containing a thermoplastic resin and a heat-resistant porous layer prepared by the methods as described above are laminated together to yield a laminate film. The heat-resistant porous layer may be provided either on one side or both sides of a porous film.

A method for laminating a porous film and a heat-resistant porous layer is exemplified in a method by which a heat-resistant porous layer and a porous film are produced individually and the two are laminated, and a method by which a coating liquid containing a heat-resistant resin and a filler is applied on at least one side of a porous film to form a heat-resistant porous layer. In case a heat-resistant porous layer is relatively thin, the latter method is preferable according to the present invention from the viewpoint of productivity. A specific example of a method, by which a coating liquid containing a heat-resistant resin and a filler is applied on at least one side of a porous film to form a heat-resistant porous layer, includes a method comprising the following steps:

> (a) a slurry-form coating liquid is prepared by dispersing 1 to 1500 parts by weight of a filler, relative to 100 parts by weight of a heat-resistant resin, into a solution of a polar organic solvent containing 100 parts by weight of a heat-resistant resin;
> (b) the coating liquid is applied on at least one side of a porous film to form a coating film; and
> (c) a heat-resistant resin is precipitated from the coating film by means of moistening, solvent removal or immersion into a solvent that does not dissolve the heat-resistant resin, and then followed, if required, by drying.

A coating liquid is preferably applied continuously by a coating device described in Japanese Unexamined Patent Publication No. 2001-316006, and a method described in Japanese Unexamined Patent Publication No. 2001-23602.

In case the heat-resistant resin is a para-aramid, a polar amide solvent or a polar urea solvent can be used as a polar organic solvent. Specific examples thereof include, but not limited to, N,N-dimethylformamide, N,N-dimethylacetamide, N-methyl-2-pyrrolidone (NMP), and tetramethylurea.

In case a para-aramid is used as a heat-resistant resin, it is preferable to add a chloride of an alkali metal or an alkaline earth metal during a polymerization of a para-aramid, in order to improve the solubility of the para-aramid into a solvent. Specific examples thereof include, but not limited to, lithium chloride and calcium chloride. The amount of such a chloride to be added into a polymerization system is preferably, relative to 1.0 mol of an amide group to be formed by condensation polymerization, in a range of 0.5 to 6.0 mol, and more preferably in a range of 1.0 to 4.0 mol. In case a chloride is less than 0.5 mol, the solubility of a para-aramid to be formed may be occasionally insufficient, and in case it exceeds 6.0 mol, it exceeds substantially the solubility of a chloride in the solvent, which is occasionally unfavorable. In general, in case a chloride of an alkali metal or an alkaline earth metal is less than 2% by weight, the solubility of a para-aramid may be occasionally insufficient, and in case it exceeds 10% by weight, the chloride of an alkali metal or an alkaline earth metal may be occasionally not soluble in a polar organic solvent such as a polar amide solvent and a polar urea solvent.

In case a heat-resistant resin is an aromatic polyimide, as a polar organic solvent to dissolve an aromatic polyimide, in addition to the explained solvents to dissolve an aramid, dimethylsulfoxide, cresol, o-chlorophenol, *etc.*, can be favorably used.

As an apparatus for dispersing a filler to prepare a slurry-form coating liquid, a high pressure homogenizer (Gaullin Homogenizer, and nanomizer), etc., may be used favorably.

Examples of a method for applying a slurry-form coating liquid include knife-, blade-, bar-, gravure-, die-coating methods. Bar- and knife-coating methods are simple, but industrially a die coating method with a structure, by which a solution is not brought into contact with an atmosphere, is preferable. Applying may be conducted twice or more. Such a repeatedly applying is usually conducted after the precipitation of a heat-resistant resin according to the step (c) above.

In case a heat-resistant porous layer and a porous film is produced separately and laminated together, they should better be fixed by an adhesive or by heat-sealing.

Electrolyte Solution

An electrolyte solution contains an electrolyte and an organic solvent.

Examples of an electrolyte include $NaClO_4$, $NaPF_6$, $NaAsF_6$, $NaSbF_6$, $NaBF_4$, $NaCF_3SO_3$, $NaN(SO_2CF_3)_2$, a lower aliphatic carboxylic acid sodium salt, and $NaAlCl_4$, which may be used alone or in a combination of two or more. Among them, an electrolyte containing at least one selected from the group consisting of $NaPF_6$, $NaAsF_6$, $NaSbF_6$, $NaBF_4$, $NaCF_3SO_3$ and $NaN(SO_2CF_3)_2$, which contain fluorine, is preferable.

Examples of an applicable organic solvent include carbonates, such as propylene carbonate, ethylene carbonate, dimethyl carbonate, diethyl carbonate, ethyl methyl carbonate, isopropyl methyl carbonate, vinylene carbonate, 4-trifluoromethyl-1,3-dioxolan-2-one, and 1,2-di(methoxycarbonyloxy)ethane; ethers, such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters, such as methyl formate, methyl acetate, and $\gamma$-butyrolactone; nitriles, such as acetonitrile, and butyronitrile; amides, such as N,N-dimethylformamide, and N,N-dimethylacetamide; carbamates such as 3-methyl-2-oxazolidone; and sulfur-containing compounds, such as sulfolane, dimethylsulfoxide, and 1,3-propane sultone; and fluorine-substituted compounds thereof. Usually a combination of two or more solvents thereof is used as an organic solvent.

Method for Producing Sodium Secondary Battery

A sodium secondary battery is produced, for example, by preparing an electrode assembly by laminating or winding a positive electrode, a separator and a negative electrode in the order mentioned, placing the electrode assembly into a container such as a battery can, and then impregnating an electrolyte solution containing an electrolyte in an organic solvent into the electrode assembly.

Examples of the form of an electrode assembly, *e.g.*, a section of an electrode assembly cut perpendicular to the winding axis, include a circle, an oval, a rectangle, and a rectangle with rounded corners. Examples of the form of a battery include a paper-shaped, coin-shaped, cylindrical, and square-shaped form.

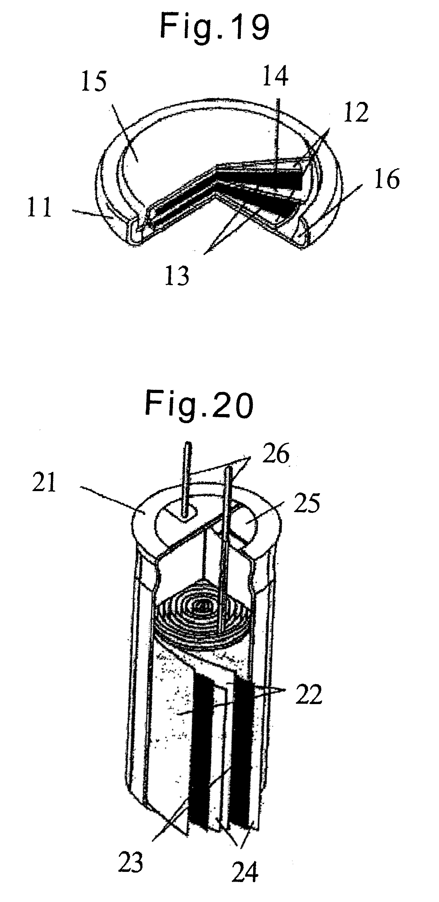

A producing example of a coin-shaped sodium secondary battery includes, as shown in Fig. 19, a method of piling up successively a metallic container (11) of a stainless steel, etc., an electrode (current collector (12) and electrode material (13)), a separator (14), an electrode (electrode material (13) and current collector (12)); impregnating an electrolyte solution; and sealing with a metallic lid (15) and a gasket (16).

A producing example of a cylindrical sodium secondary battery includes, as shown in Fig. 20, a method for winding two sheets of electrodes (current collectors (22) and electrode material (23)) sandwiching a separator (24); placing it in a cylindrical metallic container (21) made of aluminum, a stainless steel, etc.; impregnating an electrolyte solution; and sealing with an electrode sealing plate (25). In case of a square-shaped sodium secondary battery, a square-shaped metallic container is used. The electrodes are provided with leads, and one of the electrode leads (26) functions as a positive electrode, the other electrode lead (26) functions as a negative electrode, and electricity is charged and discharged. Instead of a metallic container, a sack-like package made of a laminated sheet containing aluminum may be used.

In a sodium secondary battery, a solid electrolyte may be used instead of an electrolyte solution. As solid electrolyte, for example, an organic solid electrolyte, such as a polyethylene oxide polymer and a polymer including at least one of a polyorganosiloxane chain and a polyoxyalkylene chain, may be used. A so-called gel type electrolyte, which is an electrolyte solution retained by a polymer, may be used. Further, an inorganic solid electrolyte, such as $Na_2S$-$SiS_2$, $Na_2S$-$GeS_2$, $NaTi_2(PO_4)_3$, $NaFe_2(PO4)3$, $Na_2(SO4)_3$, $Fe_2(SO4)_2(PO_4)$, and $Fe_2(MoO_4)_3$, may be used. A solid electrolyte may occasionally function as a separator in a sodium secondary battery, and in such a case a separator may not be required.

A sodium secondary battery having the above-described electrode as a positive electrode has been fully described above; and, a sodium secondary battery having the above-described electrode as a negative electrode can be produced identically.

EXAMPLES

The present invention will now be described in more details by means of examples, provided that the present invention be not limited thereto. An evaluation method of an electrode active material and producing methods of an electrode and a sodium secondary battery are as follows.

(1) Method of Measurement of Particle Size (D50) on Electrode Active Material

A particle size distribution measurement by means of, a laser diffraction and scattering method was carried out on an electrode active material (a powdery mixed metal oxide) by using a laser scattering particle size distribution analyzer (Mastersizer MS2000, by Malvern Instruments Ltd.) to obtain the volume-based cumulative particle size distribution of the constituent particles, and the particle size (D50) at 50% cumulation counted from the smallest particle size side was determined.

(2) Powder X-ray Diffraction Measurement on Electrode Active Material

A measurement was carried out on an electrode active material using a powder X-ray diffraction apparatus (RINT2500TTR, by Rigaku Corporation) under the following conditions.

| | |
|---|---|
| X-rays: | $CuK\alpha$ |
| Voltage-current: | 40 kV-140 mA |
| Measurement angle range: | $2\theta = 10$ to $90°$ |
| Step size: | $0.02°$ |
| Scanning speed: | $4°/min$ |

(3) Production of Electrode

An electrode active material, an acetylene black (Denki Kagaku Kogyo K.K.) as a conductive additive and PVDF (poly(vinylidenedifluoride); by Kureha Corporation) as a binder were respectively weighed out to a weight ratio of electrode active material : conductive additive : binder = 70:25:5. Then the binder was dissolved in N-methylpyrrolidone (NMP; by Tokyo Chemical Industry Co., Ltd.), to which the electrode active material and the conductive additive were added and mixed uniformly to form a slurry. The formed slurry was applied on a 40 $\mu$m-thick aluminum foil as a current collector by a doctor blade, followed by drying thoroughly in a drier, while removing NMP, to yield an electrode sheet. The electrode sheet was punched out by an electrode puncher to complete a 1.45 cm-diameter round electrode.

(4) Production of Sodium Secondary Battery

The electrode obtained in (1) above was used as a positive electrode. In a cavity of a lower part of a coin cell case (by Hohsen Corp.), the positive electrode was placed facing down an aluminum foil, a separator (a porous 20 $\mu$m-thick film of polypropylene) was placed thereon, and then an electrolyte solution (1M $NaClO_4$/propylene carbonate) was injected. Using a negative electrode (a metallic sodium foil, by Sigma-Aldrich, Inc.), the metallic sodium foil and an internal lid were combined and placed on the upper side of the separator facing down the metallic sodium foil, and then sandwiching a gasket, an upper part was capped and caulked by a caulking device to complete a sodium secondary battery. The assembly of the battery was carried out in an argon atmosphere in a glove box.

Example 1

(1) Synthesis of Electrode Active Material

($NaFe_{0.95}Mn_{0.05}O_2$)

To 250 mL of distilled water in a polypropylene beaker, 10.00 g of sodium hydroxide was added and stirred to dissolve the sodium hydroxide completely, thereby preparing an aqueous solution of sodium hydroxide (precipitant). To 200 mL of distilled water in another polypropylene beaker, 20.00 g of iron (II) chloride tetrahydrate, and 1.058 g of manganese (II) chloride tetrahydrate were added and stirred to dissolve, thereby yielding an aqueous solution containing iron and manganese. The aqueous solution containing iron and manganese was dropped to the precipitant with stirring to yield a slurry of a produced precipitate. Then the slurry was filtrated and washed by distilled water, followed by drying at 100°C to yield precipitate 1. The composition of precipitate 1 was analyzed by ICP (inductively coupled plasma) emission spectroscopy to find Fe:Mn = 0.95:0.05 (by mol). Precipitate 1 and sodium carbonate were weighed out to Fe: Na = 0.95:1 (by mol) and mixed in a dry state in an agate mortar to yield a mixture. Then, the mixture was placed in an alumina calcination container, calcined by being kept in an electric oven at 750°C for 6 hours in the air atmosphere, and cooled down to the room temperature to yield electrode active material 1.

(2) Evaluation of Electrode Active Material

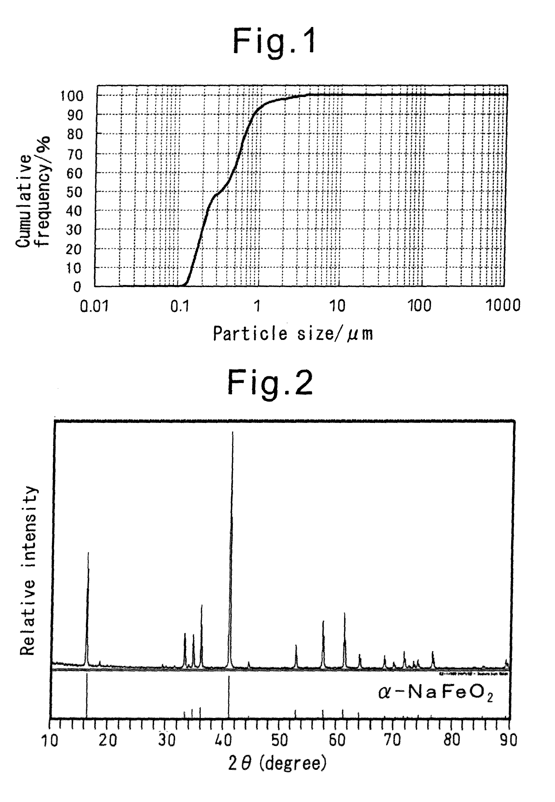

According to a particle size distribution measurement on electrode active material 1, the D50 value was 0.33 $\mu$m (Fig. 1). According to a powder X-ray diffraction analysis on electrode active material 1, it was found to have a crystal structure belonging to the $\alpha$-NaFeO$_2$ type (Fig. 2).

(3) Evaluation of Sodium Secondary Battery

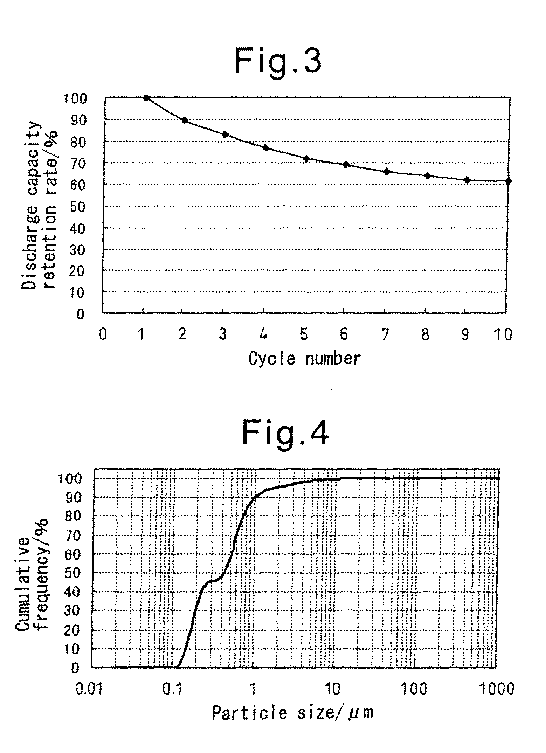

An electrode was prepared using electrode active material 1, and sodium secondary battery 1 was produced using the electrode as a positive electrode. The charge and discharge performance evaluation was conducted on the sodium secondary battery 1 under the charging and discharging conditions described below, and the retention rate of the discharge capacity at the 10th cycle relative to the discharge capacity at the 1st cycle was as high as 61.4% (Fig. 3).
Charging and Discharging Conditions: Charging was carried out from the rest potential to 4.0 V at 0.1 C-rate (the rate to complete full charge in 10 hours) by CC (constant current) charge. Discharging was carried out at 0.1 C-rate (the rate to complete full discharge in 10 hours) by CC (constant current) discharge, and cut off at a voltage of 1.5 V.

Example 2

(1) Synthesis of Electrode Active Material

(NaFe$_{0.90}$Mn$_{0.10}$O$_2$)

To 250 mL of distilled water in a polypropylene beaker, 10.00 g of sodium hydroxide was added and stirred to dissolve the sodium hydroxide completely, thereby preparing an aqueous solution of sodium hydroxide (precipitant). To 200 mL of distilled water in another polypropylene beaker, 20.00 g of iron (II) chloride tetrahydrate, and 2.236 g of manganese (II) chloride tetrahydrate were added and stirred to dissolve, thereby yielding an aqueous solution containing iron and manganese. The aqueous solution containing iron and manganese was dropped to the precipitant with stirring to yield a slurry of a produced precipitate. Then the slurry was filtrated and washed by distilled water, followed by drying at 100°C to yield precipitate 2. The composition of precipitate 2 was analyzed by ICP (inductively coupled plasma) emission spectroscopy to find Fe:Mn = 0.90:0.10 (by mol). Precipitate 2 and sodium carbonate were weighed out to Fe: Na = 0.90:1 (by mol) and mixed in a dry state in an agate mortar to yield a mixture. Then, the mixture was placed in an alumina calcination container, calcined by being kept in an electric oven at 750°C for 6 hours in the air atmosphere, and cooled down to the room temperature to yield electrode active material 2.

(2) Evaluation of Electrode Active Material

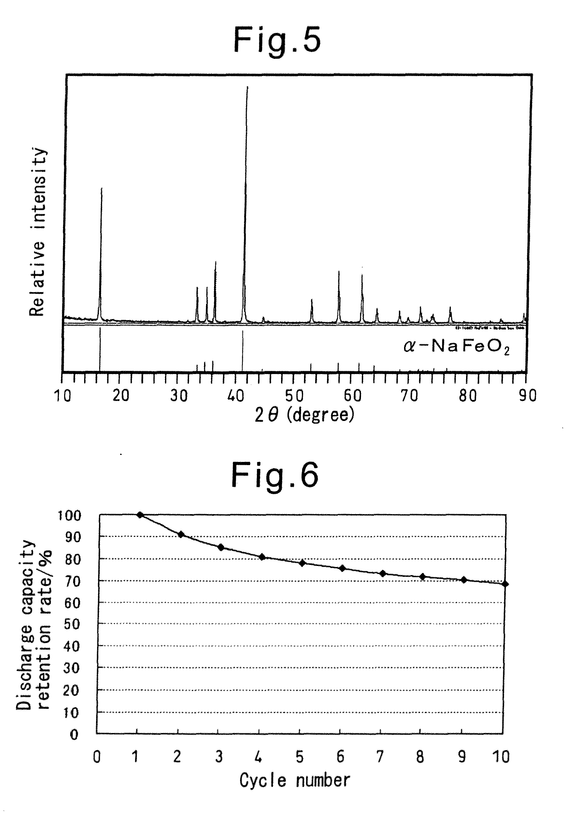

According to a particle size distribution measurement on electrode active material 2, the D50 value was 0.42 $\mu$m (Fig. 4). According to a powder X-ray diffraction analysis on electrode active material 2, it was found to have a crystal structure belonging to the $\alpha$-NaFeO$_2$ type (Fig. 5).

(3) Evaluation of Sodium Secondary Battery

An electrode was prepared using electrode active material 2, and sodium secondary battery 2 was produced using the electrode as a positive electrode. The charge and discharge performance evaluation was conducted on sodium secondary battery 2 under the same charging and discharging conditions as in example 1, and the efficiency of the discharge capacity at the 10th cycle relative to the discharge capacity at the 1st cycle was as high as 68.4% (Fig. 6).

Example 2

(1) Synthesis of Electrode Active Material

$(NaFe_{0.75}Mn_{0.25}O_2)$

To 250 mL of distilled water in a polypropylene beaker, 10.00 g of sodium hydroxide was added and stirred to dissolve the sodium hydroxide completely, thereby preparing an aqueous solution of sodium hydroxide (precipitant). To 200 mL of distilled water in another polypropylene beaker, 20.00 g of iron (II) chloride tetrahydrate, and 6.705 g of manganese (II) chloride tetrahydrate were added and stirred to dissolve, thereby yielding an aqueous solution containing iron and manganese. The aqueous solution containing iron and manganese was dropped to the precipitant with stirring to yield a slurry of a produced precipitate. Then the slurry was filtrated and washed by distilled water, followed by drying at 100°C to yield precipitate 3. The composition of precipitate 3 was analyzed by ICP (inductively coupled plasma) emission spectroscopy to find Fe:Mn = 0.75:0.25 (by mol). Precipitate 3 and sodium carbonate were weighed out to Fe: Na = 0.75:1 (by mol) and mixed in a dry state in an agate mortar to yield a mixture. Then, the mixture was placed in an alumina calcination container, calcined by being kept in an electric oven at 750°C for 6 hours in the air atmosphere, and cooled down to the room temperature to yield electrode active material 3.

(2) Evaluation of Electrode Active Material

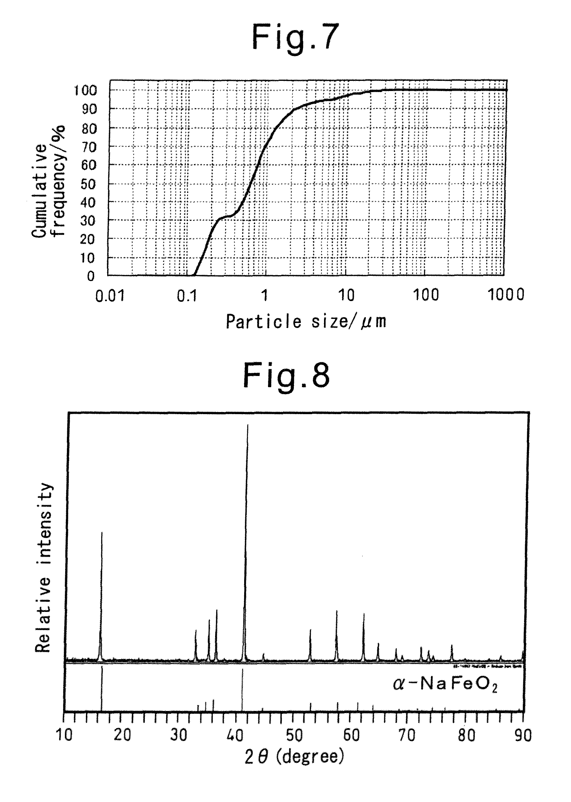

According to a particle size distribution measurement on electrode active material 3, the D50 value was 0.61 $\mu$m (Fig. 7). According to a powder X-ray diffraction analysis on electrode active material 3, it was found to have a crystal structure belonging to the $\alpha$-NaFeO$_2$ type (Fig. 8).

(3) Evaluation of Sodium Secondary Battery

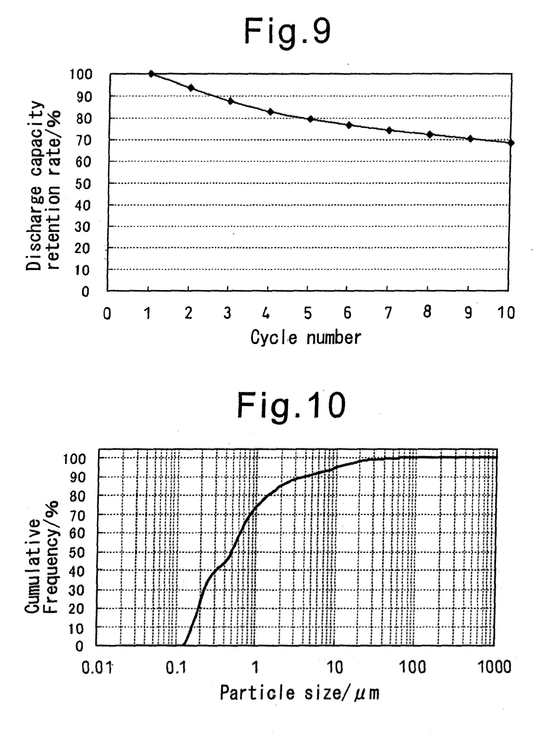

An electrode was prepared using electrode active material 3, and sodium secondary battery 3 was produced using the electrode as a positive electrode. The charge and discharge performance evaluation was conducted on the sodium secondary battery 3 under the same charging and discharging conditions as in the example 1, and the efficiency of the discharge capacity at the 10th cycle relative to the discharge capacity at the 1st cycle was as high as 68.7% (Fig. 9).

Example 4

(1) Synthesis of Electrode Active Material (Na(Fe,Ni)O$_2$)

To 250 mL of distilled water in a polypropylene beaker, 10.00 g of sodium hydroxide was added and stirred to dissolve the sodium hydroxide completely, thereby preparing an aqueous solution of sodium hydroxide (precipitant). To 200 mL of distilled water in another polypropylene beaker, 20.00 g of iron (II) chloride tetrahydrate, and 1.284 g of nickel (II) chloride hexahydrate were added and stirred to dissolve, thereby yielding an aqueous solution containing iron and nickel. The aqueous solution containing iron and nickel was dropped to the precipitant with stirring to yield a slurry of a produced precipitate. Then the slurry was filtrated and washed by distilled water, followed by drying at 100°C to yield precipitate 4. The composition of precipitate 4 was analyzed by ICP (inductively coupled plasma) emission spectroscopy to find Fe:Ni = 0.95:0.05 (by mol). Precipitate 4 and sodium hydroxide were weighed out to Fe:Na = 0.95:1 (by mol) and mixed in a dry state in an agate mortar to yield a mixture. Then, the mixture was placed in an alumina calcination container, calcined by being kept in an electric oven at 600°C for 6 hours in the air atmosphere, and cooled down to the room temperature to yield electrode active material 4.

(2) Evaluation of Electrode Active Material

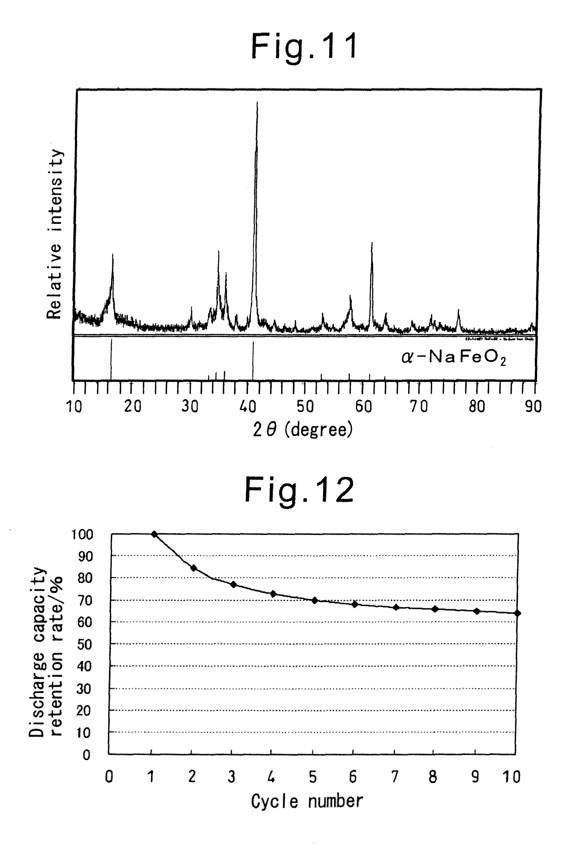

According to a particle size distribution measurement on electrode active material 4, the D50 value was 0.49 $\mu$m (Fig. 10). According to a powder X-ray diffraction analysis on electrode active material 4, it was found to have a crystal structure belonging to the $\alpha$-NaFeO$_2$ type (Fig. 11).

(3) Evaluation of Sodium Secondary Battery

An electrode was prepared using electrode active material 4, and sodium secondary battery 4 was produced using the electrode as a positive electrode. The charge and discharge performance evaluation was conducted on the sodium secondary battery 4 under the same charging and discharging conditions as in the example 1, and the efficiency of the discharge capacity at the 10th cycle relative to the discharge capacity at the 1st cycle was as high as 63.7% (Fig. 12).

Example 5

(1) Synthesis of Electrode Active Material

$(Na(Fe,Mn,Ni)O_2)$

To 250 mL of distilled water in a polypropylene beaker, 20.00 g of sodium hydroxide was added and stirred to dissolve the sodium hydroxide completely, thereby preparing an aqueous solution of sodium hydroxide (precipitant). To 200 mL of distilled water in another polypropylene beaker, 10.00 g of iron (II) chloride tetrahydrate, 10.057 g of manganese (II) chloride tetrahydrate and 12.203 g of nickel (II) chloride hexahydrate were added and stirred to dissolve, thereby yielding an aqueous solution containing iron, manganese and nickel. The aqueous solution containing iron, manganese and nickel was dropped to the precipitant with stirring to yield a slurry of a produced precipitate. Then the slurry was filtrated and washed by distilled water, followed by drying at 100°C to yield precipitate 5. The composition of precipitate 5 was analyzed by ICP (inductively coupled plasma) emission spectroscopy to find Fe:Mn:Ni = 0.33:0.33:0.34 (by mol). Precipitate 5 and sodium carbonate were weighed out to Fe:Na = 0.33:1 (by mol) and mixed in a dry state in an agate mortar to yield a mixture. Then, the mixture was placed in an alumina calcination container, calcined by being kept in an electric oven at 750°C for 6 hours in the air atmosphere, and cooled down to the room temperature to yield electrode active material 5.

(2) Evaluation of Electrode Active Material

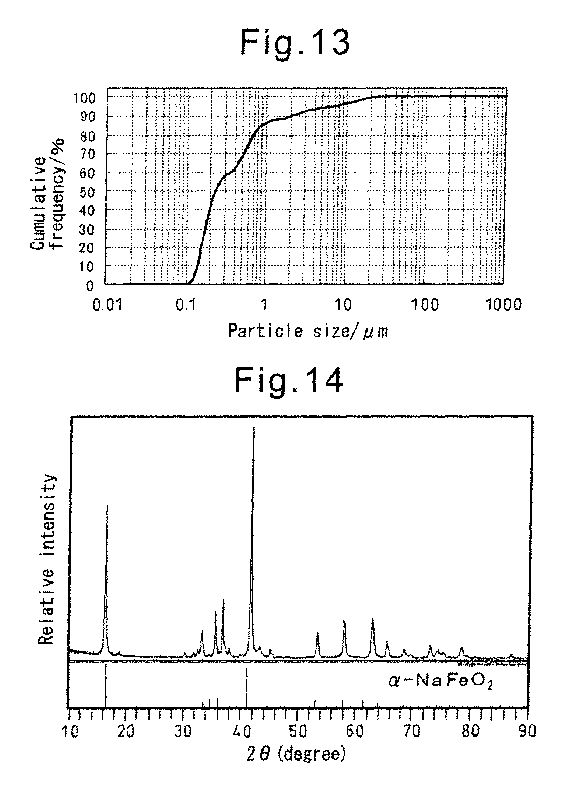

According to a particle size distribution measurement on electrode active material 5, the D50 value was 0.23 $\mu$m (Fig. 13). According to a powder X-ray diffraction analysis on electrode active material 5, it was found to have a crystal structure belonging to the $\alpha$-NaFeO$_2$ type (Fig. 14).

(3) Evaluation of Sodium Secondary Battery

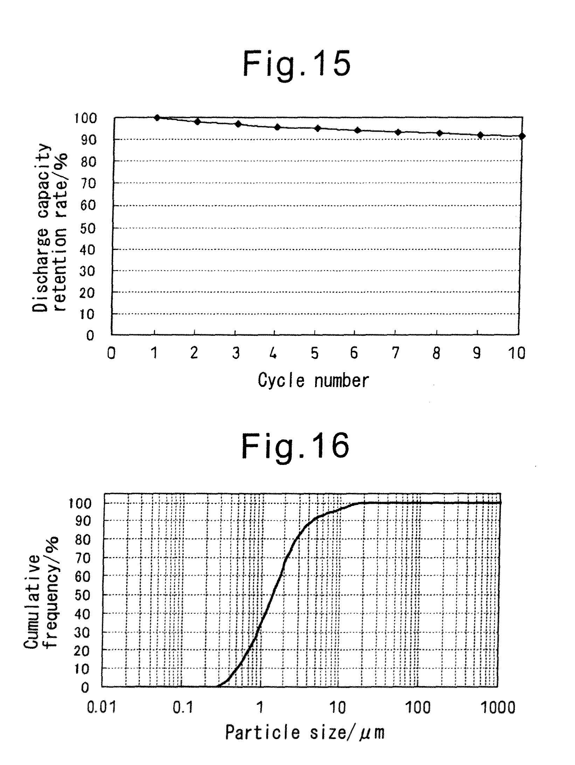

An electrode was prepared using electrode active material 5, and sodium secondary battery 5 was produced using the electrode as a positive electrode. The charge and discharge performance evaluation was conducted on the sodium secondary battery 5 under the same charging and discharging conditions as in the example 1, and the efficiency of the discharge capacity at the 10th cycle relative to the discharge capacity at the 1st cycle was as high as 91.4% (Fig. 15).

Comparative Example 1

(1) Synthesis of Electrode Active Material (NaFeO$_2$)

Sodium carbonate and triiron tetraoxide were weighed out to Na:Fe = 1:1 (by mol), and mixed in a dry state in an agate mortar to yield a mixture. Then, the mixture was placed in an alumina calcination container, calcined by being kept in an electric oven at 750°C for 6 hours in the air atmosphere, and cooled down to the room temperature to yield electrode active material R1.

(2) Evaluation of Electrode Active Material

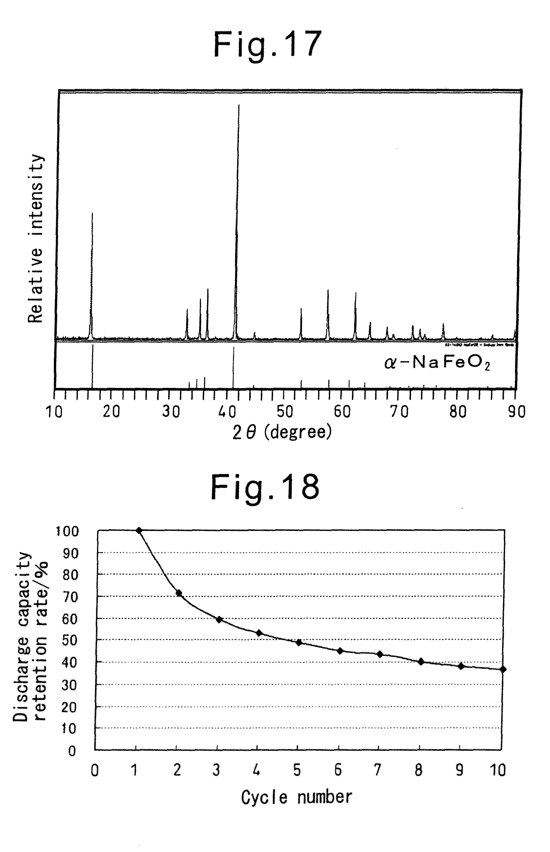

According to a particle size distribution measurement on electrode active material R1, the D50 value was 1.41 $\mu$m (Fig. 16). According to a powder X-ray diffraction analysis on electrode active material R1, it was found to have a crystal structure belonging to the $\alpha$-NaFeO$_2$ type (Fig. 17).

(3) Evaluation of Sodium Secondary Battery

An electrode was prepared using the electrode active material R1, and sodium secondary battery R1 was produced using the electrode as a positive electrode. The charge and discharge performance evaluation was conducted on the sodium secondary battery R1 under the same charging and discharging conditions as in the example 1, and the efficiency of the discharge capacity at the 10th cycle relative to the discharge capacity at the 1st cycle was as low as 36.5% (Fig. 18).

Production Example (Laminate Film)

(1) Production of Coating Liquid

In 4200 g of NMP 272.7 g of calcium chloride was dissolved, and 132.9 g of p-phenylenediamine was added and dissolved completely therein. To the resulted solution, 243.3 g of terephthaloyl dichloride (hereinafter abbreviated as TPC) was gradually added to cause polymerization yielding para-aramide, which was then diluted further by NMP to prepare a 2.0 weight-% para-aramide solution (A). To 100 g of the prepared para-aramid solution, 2 g of alumina powder (a) (Alumina C, by Nippon Aerosil Co., Ltd., mean particle size of 0.02 $\mu$m (corresponding to $D_2$), almost spherical particle form, particle aspect ratio of 1) and 2 g of alumina powder (b) (Sumicorundum AA03, by Sumitomo Chemical Co., Ltd., mean particle size 0.3 $\mu$m (corresponding to $D_1$), almost spherical particle form, particle aspect ratio of 1) were added as fillers (total 4 g), then mixed, treated three times by a nanomizer, filtered through a 1000 mesh wire gauze, and degassed under a reduced pressure to yield a slurry form coating liquid (B). The weight of the alumina powders (fillers) was equivalent to 67% by weight of the total weight of the para-aramid and the alumina powders. The $D_2/D_1$ was 0.07.

(2) Production of Laminate Film

A polyethylene porous film having a film thickness of 12 $\mu$m, an air permeance of 140 sec/100 cm$^3$, a mean pore size of 0.1 $\mu$m, and a porosity of 50% was used as a porous film. Fixing the polyethylene porous film on a 100 $\mu$m-thick PET film, the slurry form coating liquid (B) was applied on the porous film by a bar coater (by Tester Sangyo Co., Ltd.). The PET film integrated with the coated porous film was immersed into water, which was a poor solvent, to deposit a para-aramid porous layer (a heat-resistant porous layer), and after removing the solvent, laminate film 1 composed of the heat-resistant porous layer and the porous film was obtained. The thickness of laminate film 1 was 16 $\mu$m, and the thickness of the para-aramid porous layer (the heat-resistant porous layer) was 4 $\mu$m. The air permeance of laminate film 1 was 180 sec/100 cm$^3$, and the porosity was 50%. According to observation by a scanning electron microscope (SEM) of a section of the heat-resistant porous layer in laminate film 1, it became clear that it had relatively small micro-pores of about 0.03 $\mu$m to 0.06 $\mu$m and relatively large micro-pores of about 0.1 $\mu$m to 1 $\mu$m. Further as described above, a para-aramid, which was an aromatic polymer containing nitrogen, was used for the heat-resistant porous layer of laminate film 1, and the thermal rupture temperature of laminate film 1 was about 400°C. The laminate film was evaluated according to the following methods.

(3) Evaluation of Laminate Film

(A) Thickness Measurement

The thickness of a laminate film or a porous film was measured according to JIS Standard (K7130-1992). The thickness of a heat-resistant porous layer was determined by deducing the thickness of a porous film from the thickness of a laminate film.

(B) Measurement of Air Permeance by Gurley Method

The air permeance of a laminate film was measured according to JIS P8117 by a Gurley densometer with a digital timer (by Yasuda Seiki Seisakusho Ltd.).

(C) Porosity

A square with side length of 10 cm was cut from the produced laminate film as a sample, and the weight W (g) and the thickness D (cm) thereof were measured. The weight $W_i$ (g) of each layer in the sample was determined, then the volume of each layer was determined from the $W_i$ and the true density $\rho_i$ (g/cm$^3$) of the material of each layer, and the porosity (% by volume) was calculated from the following formula:

$$\text{porosity (\% by volume)} = 100 \times [1 - (W_1/\rho_1 + W_2/\rho_2 + \ldots + W_n/\rho_n) / (10 \times 10 \times D)]$$

In case a laminate film as produced in the production example is used as a separator for a sodium secondary battery of the above-described examples, a sodium secondary battery with higher resistance to thermal rupture can be obtained.

INDUSTRIAL APPLICABILITY

According to the present invention is provided an electrode active material, which can decrease an amount of rare metal elements such as lithium, and further impart a higher discharge capacity retention rate after charge and discharge are conducted repeatedly to a sodium secondary battery, as well as a method for producing the same.

REFERENCE SIGNS LIST

11:  Metallic container
12:  Current collector
13:  Electrode material
14:  Separator
15:  Metallic lid
16:  Gasket
21:  Metallic container
22:  Current collector
23:  Electrode material
24:  Separator
25:  Electrode sealing plate
26:  Lead

**Claims**

1.  A method for producing an electrode active material, comprising the steps of:

    (i) bringing an aqueous solution containing M into contact with a precipitant to yield a precipitate, wherein M represents at least two elements selected from the group consisting of metal elements other than alkali metal elements;
    (ii) mixing the precipitate with a sodium compound to yield a mixture; and
    (iii) calcining the mixture.

2.  The method according to claim 1, wherein M represents at least two selected from the group consisting of Fe, Mn, Ni, Co and Ti.

3.  The method according to claim 1 or 2, wherein the precipitant is in a form of an aqueous solution.

4.  An electrode active material comprising a powdery mixed metal oxide containing sodium and M, wherein M represents at least two elements selected from the group consisting of metal elements other than alkali metal elements, wherein the particle size (D50) of the mixed metal oxide determined by a volume-based cumulative particle size distribution at 50% cumulation counted from the smallest particle size side thereof is less than 1.0 $\mu$m.

5.  The electrode active material according to claim 4, wherein the mixed metal oxide is represented by formula (1):

    $$Na_xMO_2 \qquad (1)$$

    wherein M represents at least two elements selected from the group consisting of metal elements other than alkali metal elements, and x is more than 0 but not more than 1.

6.  The electrode active material according to claim 4 or 5, wherein M represents at least two selected from the group consisting of Fe, Mn, Co, Ni and Ti.

**7.** The electrode active material according to any one of claims 4 to 6, wherein M represents a combination of Fe, Mn and Ni.

**8.** An electrode comprising the electrode active material according to any one of claims 4 to 7.

**9.** A sodium secondary battery comprising the electrode according to claim 8 as a positive electrode.

**10.** The sodium secondary battery according to claim 9, further comprising a separator.

**11.** The sodium secondary battery according to claim 10, wherein the separator comprises a laminate film composed of a heat-resistant porous layer and a porous film.

# Fig.1

# Fig.2

# Fig.3

# Fig.4

# Fig.5

# Fig.6

# Fig.7

# Fig.8

# Fig.9

# Fig.10

# Fig.11

# Fig.12

24

# Fig.13

# Fig.14

$\alpha$-NaFeO$_2$

# Fig.15

# Fig.16

# Fig.17

$\alpha-NaFeO_2$

# Fig.18

# Fig.19

# Fig.20

## INTERNATIONAL SEARCH REPORT

International application No.

PCT/JP2009/064894

### A. CLASSIFICATION OF SUBJECT MATTER
*H01M4/52*(2006.01)i, *H01M2/16*(2006.01)i, *H01M4/48*(2006.01)i, *H01M4/50* (2006.01)i, *H01M10/40*(2006.01)i

According to International Patent Classification (IPC) or to both national classification and IPC

### B. FIELDS SEARCHED

Minimum documentation searched (classification system followed by classification symbols)
H01M4/52, H01M2/16, H01M4/48, H01M4/50, H01M10/40

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-179473 A (Kyushu University),<br>06 July 2006 (06.07.2006),<br>claims; paragraph [0011]; examples<br>& US 2009/0159838 A     & EP 1826845 A1<br>& WO 2006/057307 A1     & KR 10-2007-0085461 A<br>& CN 101065867 A | 4-10<br>1-3,11 |
| X<br>Y | JP 3-291863 A (Showa Denko Kabushiki Kaisha),<br>24 December 1991 (24.12.1991),<br>claims; examples<br>(Family: none) | 4-6,8-10<br>1-3,11 |
| X<br>Y | JP 2007-287661 A (Sanyo Electric Co., Ltd.),<br>01 November 2007 (01.11.2007),<br>claims; paragraph [0071]; example 1<br>& US 2007/0218361 A1     & CN 101043093 A | 4-10<br>1-3,11 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    30 October, 2009 (30.10.09) | Date of mailing of the international search report<br>    10 November, 2009 (10.11.09) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/064894 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2001-332258 A  (Nippon Telegraph And<br>Telephone Corp.),<br>30 November 2001 (30.11.2001),<br>claims; paragraph [0020]; examples<br>(Family: none) | 4-10<br>1-3,11 |
| Y | JP 2000-353525 A  (Toyota Central Research and<br>Development Laboratories, Inc.),<br>19 December 2000 (19.12.2000),<br>paragraph [0048]<br>(Family: none) | 1-3 |
| Y | JP 2004-265863 A  (Matsushita Electric<br>Industrial Co., Ltd.),<br>24 September 2004 (24.09.2004),<br>paragraphs [0026] to [0027]<br>& US 2004/0157125 A1    & KR 10-2004-0073350 A<br>& CN 1521875 A | 1-3 |
| Y | JP 2000-30686 A  (Sumitomo Chemical Co., Ltd.),<br>28 January 2000 (28.01.2000),<br>claims; examples<br>& US 6447958 B1          & DE 19918856 A<br>& TW 460505 B            & CA 2269892 A<br>& CA 2269892 A1 | 11 |
| Y | JP 2002-69221 A  (Sumitomo Chemical Co., Ltd.),<br>08 March 2002 (08.03.2002),<br>claim 8; examples<br>& US 2002/0034689 A1    & US 2006/0055075 A1<br>& EP 1168469 A2         & DE 60128422 D<br>& DE 60128422 T         & CA 2350379 A<br>& CN 1331496 A          & CN 1840575 A<br>& CA 2350379 A1 | 11 |
| A | JP 2005-317511 A  (Jun'ichi YAMAKI),<br>10 November 2005 (10.11.2005),<br>claims; paragraph [0011]<br>& US 2007/0212605 A1    & EP 1737058 A1<br>& WO 2005/096415 A      & WO 2005/096415 A1<br>& KR 10-2007-0012439 A  & CN 1950962 A | 1-11 |
| A | JP 11-40156 A  (Sanyo Electric Co., Ltd.),<br>12 February 1999 (12.02.1999),<br>claims; examples<br>(Family: none) | 1-11 |
| A | JP 2007-53081 A  (Sumitomo Chemical Co., Ltd.),<br>31 March 2007 (31.03.2007),<br>claims 1, 5<br>& US 2009/0050841 A1    & EP 1909346 A1<br>& WO 2007/011053 A      & WO 2007/011053 A1<br>& KR 10-2008-0031424 A  & CN 101223659 A | 1-11 |

Form PCT/ISA/210 (continuation of second sheet) (April 2007)

**INTERNATIONAL SEARCH REPORT**

International application No.

PCT/JP2009/064894

C (Continuation).    DOCUMENTS CONSIDERED TO BE RELEVANT

| Category* | Citation of document, with indication, where appropriate, of the relevant passages | Relevant to claim No. |
|---|---|---|
| P,A | WO 2009/099061 A1  (Sumitomo Chemical Co., Ltd.), 13 August 2009 (13.08.2009), claims; examples & WO 2009/099058 A       & WO 2009/099062 A & WO 2009/099068 A       & WO 2009/099058 A1 | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005317511 A
- JP 2000030686 A
- JP 10324758 A
- JP 7029563 A
- JP 7304110 A
- JP 2001316006 A
- JP 2001023602 A